# EUROPEAN PATENT APPLICATION

(11) **EP 3 267 708 A1**
(43) Date of publication of application: **10.01.2018**
(21) Application number: 16305867.0
(22) Date of filing: 08.07.2016
(51) Int. Cl.: H04W 12/06, H04W 12/08, H04L 29/06, H04W 12/04

(54) **METHOD, SERVER AND SYSTEM FOR SENDING DATA FROM A SOURCE DEVICE TO A DESTINATION DEVICE**

(71) Applicant: GEMALTO SA, 92190 Meudon (FR)
(72) Inventor: DUBOIS, Denis, 13881 GEMENOS cedex (FR); GARCIN, Florent, 13881 GEMENOS Cedex (FR); MUTSCHLER, Claire, 13881 GEMENOS Cedex (FR)

(57) **Abstract**

The invention relates to a method 20 for sending data from a source to a destination device. A first device 12 and a server 18 access data shared between them. The first device, as the source, sends to a server a request 22 for registering a second device 130, as the destination, with first credentials and an identifier. The server sends, based on the identifier, to the second device a request 24 for a data loading authorization with second credentials. The second device sends to the server a data loading authorization 26 with second credentials. The server stores 28 the first and the second credentials and the identifier. The second device sends back a request 214 for loading data with submitted second credentials. The server compares 216 the submitted to the stored second credentials. Only if they match, the server sends to the second device a request 220 for a data sending authorization with first credentials. The second device sends back a data sending authorization 222 with submitted first credentials. The server compares 224 the submitted to the stored first credentials. Only if they match, the server sends to the second device data 230.

The invention pertains to corresponding server and system.

## Description

### Field of the invention:

The invention relates generally to a method for sending data from a source device to a destination device.

The present invention is notably applicable to a mobile (radio-communication) field wherein a chip, as a Secure Element (or SE), may be either embedded, such as an embedded Universal Integrated Circuit Card (or eUICC), within a chip host device or removable, such as a chip included within a smart card termed Subscriber Identity Module (or SIM) type card or the like, from a chip host device.

Within the present description, a SE is a smart object that includes a chip that protects, as a tamper resistant component, access to stored data and is intended to communicate data with a SE host device, like e.g. a mobile (tele)phone, a Machine to Machine (or M2M) or an Internet of Things (or IoT) device.

The source device and/or the destination device may be a SE, a terminal or a user terminal.

Furthermore, the invention is also a server for sending data from a source device to a destination device.

The invention pertains to a system for sending data from a source device to a destination device as well.

### State of the art:

Nowadays, a mobile (tele)phone may have an eUICC, as a subscriber device, that stores securely a user profile.

However, if the subscriber device has to be replaced since the mobile phone is lost, broken or stolen, then a user of the mobile phone is not able to retrieve her or his user profile.

There is a need to provide a solution that allows retrieving securely a user profile, as data, that is stored initially in a device, like e.g. a mobile phone or an eUICC.

### Summary of the invention:

The invention proposes a solution for satisfying the just herein above specified need by supplying a method for sending from a source device to a destination device. According to the invention, a first device and a server access data shared between the first device and the server. The method comprises the following steps. The first device, as the source device, sends to a server a first message including a request for registering a second device, as the destination device. The first message includes or is accompanied with first credentials and an identifier relating to the second device. The server sends, based upon the identifier relating to the second device, to the second device a second message including a request for a data loading authorization. The second message includes or is accompanied with a request for getting second credentials. The second device sends to the server a third message including a data loading authorization. The third message includes or is accompanied with second credentials. The server stores an association of the first credentials, the identifier relating to the second device and the second credentials. The second device sends to the server a fourth message including a request for loading data. The fourth message includes or is accompanied with submitted second credentials. The server compares the submitted second credentials to the second credentials stored at the server side. Only if the submitted second credentials match the second credentials stored at the server side, the server sends to the second device a fifth message including a request for a data sending authorization. The fifth message includes or is accompanied with a request for getting first credentials. The second device sends to the server a sixth message including a data sending authorization. The sixth message includes or is accompanied with submitted first credentials. The server compares the submitted first credentials to the first credentials stored at the server side. Only if the submitted first credentials match the first credentials stored at the server side, the server sends to the second device at least a predetermined part of the data shared between the server and the first device.

The principle of the invention consists in that a first device, as a source device, that stores data registers to a server that also stores the data by sending an identifier relating to a second device, as a destination device, and first credentials to be used to authorize to send the data from the server to the second device. The server transmits, thanks to the second device identifier, to the second device a request for a data loading authorization along with a request for getting second credentials. The second device transmits to the server an authorization along with second credentials to be used to authorize to receive the data from the server. The server registers together the first credentials, the second device identifier and the second credentials. Then, the second device submits to the server a request for recovering the data along with second credentials. The server analyses whether the submitted second credentials do or do not match the registered second credentials. In the affirmative, the server sends to the second device a request for getting an authorization to send the data and submitting the first credentials. Then, the second device submits to the server a request for getting the data along with first credentials. The server analyses whether the submitted first credentials do or do not match the registered first credentials. In the affirmative, the server sends to the second device a predefined part of the data shared between the server and the first device.

A submission of the first credentials and the second credentials from the second device to the server is essential to authorize a loading of data (at least in part) to the second device and that is shared between the first device and the server.

It is noteworthy that the second device may have received first credentials from the first device, a user of the first device, during a device manufacturing personalization or a server.

Likewise, the second device may have received second credentials from a user of the second device, during a device manufacturing personalization or a server.

The second device may have previously stored both first credentials and second credentials.

The invention solution does not thus require any user intervention, so that the second device accesses the first credentials and/or the second credentials.

A user does not need to go to a shop or a retail to load from the server into the second device data originating from the first device.

The invention solution is therefore user friendly.

The server ensures that the second credentials and the first credentials have been successfully submitted before sending at least in part the concerned requested data.

The invention solution allows loading securely, due to a use of the first and second credentials, data from a source device to a destination device.

According to a further aspect, the invention is a server for sending data from a source device to a destination device. According to the invention, the server accesses data shared between the server and a first device. The server is configured to receive from the first device, as the source device, a first message including a request for registering a second device, as the destination device. The first message includes or is accompanied with first credentials and an identifier relating to the second device. The server is configured to send, based upon the identifier relating to the second device, to the second device a second message including a request for a data loading authorization. The second message includes or is accompanied with a request for getting second credentials. The server is configured to receive from the second device a third message including a data loading authorization. The third message includes or is accompanied with second credentials. The server is configured to store an association of the first credentials, the identifier relating to the second device and the second credentials. The server is configured to receive from the second device a fourth message including a request for loading data. The fourth message includes or is accompanied with submitted second credentials. The server is configured to compare the submitted second credentials to the second credentials stored at the server side. The server is configured to send, only if the submitted second credentials match the second credentials stored at the server side, to the second device a fifth message including a request for getting a data sending authorization. The fifth message includes or is accompanied with a request for getting first credentials. The server is configured to receive from the second device a sixth message including a data sending authorization. The sixth message includes or is accompanied with submitted first credentials. The server is configured to compare the submitted first credentials to the first credentials stored at the server side. The server is configured to send, only if the submitted first credentials match the first credentials stored at the server side, to the second device at least a predetermined part of the data shared between the server and the first device.

According to a further aspect, the invention is a server for sending data from a source device to a destination device. According to the invention, the system includes at least a first device and a server. The first device and the server comprise means for accessing data shared between the first device and the server. The first device is configured to send, as the source device, to the server a first message including a request for registering the second device, as the destination device. The first message includes or is accompanied with first credentials and an identifier relating to the second device. And the server is configured to send, based upon the identifier relating to the second device, to the second device a second message including a request for a data loading authorization. The second message includes or is accompanied with a request for getting second credentials. The server is configured to receive from the second device a third message including a data loading authorization. The third message includes or is accompanied with second credentials. The server is configured to store an association of the first credentials, the identifier relating to the second device and the second credentials. The server is configured to receive from the second device a fourth message including a request for loading data. The fourth message includes or is accompanied with submitted second credentials. The server is configured to compare the submitted second credentials to the second credentials stored at the server side. The server is configured to send, only if the submitted second credentials match the second credentials stored at the server side, to the second device a fifth message including a request for getting a data sending authorization. The fifth message includes or is accompanied with a request for getting first credentials. The server is configured to receive from the second device a sixth message including a data sending authorization. The sixth message includes or is accompanied with submitted first credentials. The server is configured to compare the submitted first credentials to the first credentials stored at the server side. The server is configured to send, only if the submitted first credentials match the first credentials stored at the server side, to the second device at least a predetermined part of the data shared between the server and the first device.

As to the first device and/or the second device, it may be a SE, a terminal or a user terminal.

The first device and/or the second device may include a mobile phone, a portable device, such as a handheld computer, like e.g. a Personal Digital Assistant (or PDA), a palm-top computer, a Personal Computer (or PC), a Voice Over Internet Protocol (or VOIP) handset, a netbook, a tablet, a set-up box, a media player, a game console, a TeleVision (or TV) set or a machine of an M2M device or an IoT device.

### Brief description of the drawings:

Additional features and advantages of the invention will be more clearly understandable after reading a detailed description of one preferred embodiment of the invention, given as an indicative and non-limitative example, in conjunction with the following drawings:

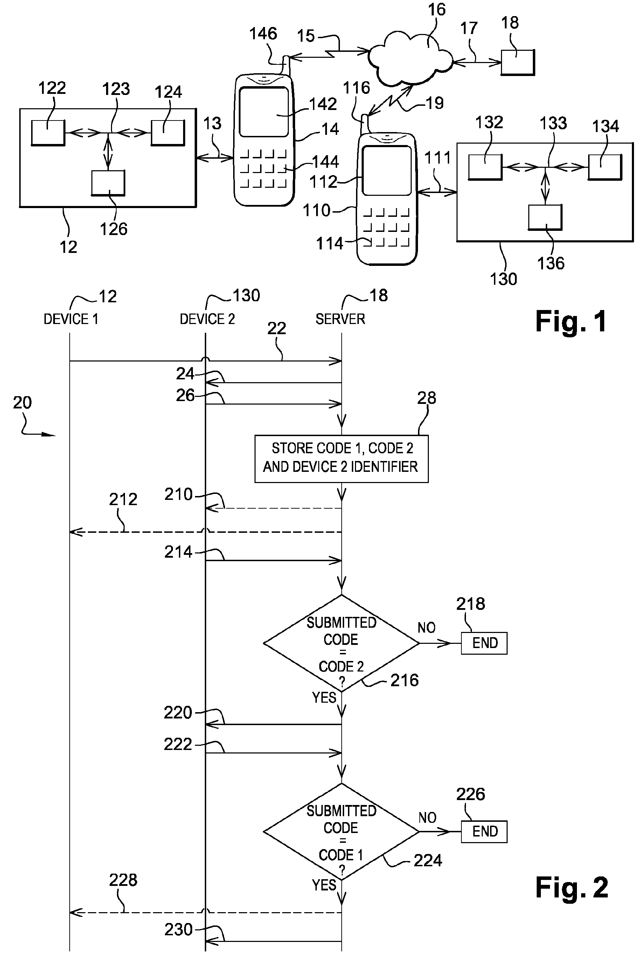

- Figure 1 illustrates a simplified diagram of one embodiment of a system for sending data from a first SE, as a first and a source device, to a second SE, as a second and a destination device, by using two credentials to load from the server in the second SE data previously shared between the first SE and the server, according to the invention; and
- Figure 2 represents an embodiment of one message flow between notably the first and second device and the remote server of figure 1, in which, firstly, the first device registers to the server the second device with first credentials, then, the second device registers to the server second credentials and the second device submits successfully to the server the second and the first credentials to get from the server at least in part the shared data.

### Detailed description:

Herein under is considered a particular embodiment in which the invention method for sending data from a source to a destination device is implemented by a first eUICC, as the source device, a second eUICC, as the destination device, and a server.

Each eUICC is a chip incorporated, possibly in a removable manner, within a Printed Circuit Board (or PCB) of a user terminal/terminal, as a chip host device.

The chip may also incorporate at least part of the terminal component(s), like e.g. a baseband processor, an application processor and/or other electronic component(s).

Alternately, instead of an eUICC, the chip may be a Trusted Execution Environment (or TEE), as a secure area of a terminal processor and a secured runtime environment.

The chip is preferably included within a SE.

The SE may nevertheless have different form factors.

Instead of being embedded within its host device, the chip may be carried by a medium, such as a smart card or a dongle, like e.g., a Universal Serial Bus (or USB) type dongle, and is communicatively coupled or connected to its host device.

The invention does not impose any constraint as to a kind of the SE, when present.

As removable SE, it may be a smart dongle of the USB type, a (micro) Secure Digital (or SD) type card, a Multi-Media type Card (or MMC), a SIM type card or any format card to be coupled to a chip host device.

Alternatively, the SE includes a chip that is fixed to a chip host device.

According to another embodiment, the invention method for sending data from a source to a destination device is implemented by an eUICC, as a source device, and a user terminal, as a destination device and a standalone entity. In other words, the destination device does not cooperate with any SE, so as to get from a server data shared between the server and the eUICC. According to such an embodiment (not represented), the second device is adapted to carry out the functions carried out by the second eUICC of the embodiment and that are described infra.

Naturally, the herein below described embodiment is only for exemplifying purposes and is not considered to reduce the scope of the invention.

**Figure 1** shows schematically a system for sending data from a first eUICC 12, as a first and a source device, to a second eUICC 130, as a second and a destination device.

Such a system includes the first eUICC 12, a first mobile phone 14, the second eUICC 130, a second mobile phone 110 and a remote (or local) server 18.

It is to be noted that only two devices 12 and 130 are represented for clarity reason. However, it is clear that the server 18 is able to provide a fleet of devices with data to be shared, over the server, from a device to another device or the same device.

For sake of simplicity, the first eUICC 12, the first mobile phone 14, the second eUICC 130, the second mobile phone 110 and the remote server 18 are termed herein after the (first) SE 12, the (first) TE (for TErminal) 14, the (second) SE 130, the (second) TE 110 and the server 18 respectively.

Instead of a mobile phone, each SE host device may be any other computer device including means for processing data, comprising or being connected to wire, contact-less and/or wireless communication means for exchanging data with outside and comprising or being connected to means for storing data.

Within the present description, the adjective "wireless" used within the expression "wireless communication means" has, as meaning, that the communication means communicates via one or several Long Range (or LR) RadioFrequency (or RF) links. The LR RF may be fixed at several hundreds of MHz, for instance, around 850, 900, 1800 and/or 1900 MHz.

Within the present description, the adjective "contact-less" used within the expression "contact-less communication means" has, as meaning, notably that the communication means communicates via one or several Short Range (or SR) RF links. The SR RF may be related to a Near Field Communication (or NFC) type, Bluetooth type or Wifi type technology. Such a set of technology types is not exhaustive. Such an SR RF link may be used for exchanging data between the TE 14 or the TE 110 and the server 18, at a SR distance typically from around 20 cm (such as with an NFC type technology) to around 800 m (such as with a Bluetooth type technology). The SR RF link may be fixed, for instance, at 13,56 Mhz for NFC with a range up to around 20 cm, at 2,4-2,5 GHz with a range of about 10 m to about 100 m (for Zigbee (e.g. IEEE 802.15.4), Wifi and Bluetooth or Bluetooth low energy (e.g. IEEE 802.15.1)), from around 2,4 GHz to around 10 GHz (for Ultra Wide Band (or UWB) e.g. IEEE 802.15.4a).

The first TE 14 and the second TE 110 are preferably used for accessing a mobile (radio-communication) network(s) 16.

The mobile network(s) 16 may be constituted by a Global System for Mobile communications (or GSM), a General Packet Radio Service (or GPRS), a Universal Mobile Telecommunications System (or UMTS), a Code Division Multiple Access (or CDMA) and/or a Long Term Evolution (or LTE) type network(s).

The mobile network set is not exhaustive but only for exemplifying purposes.

Instead of a mobile network(s) or additionally, the network(s) includes an Internet type network accessible, via a contact-less link, like e.g. a link of the type Wifi or Bluetooth, through an intermediate entity, as a Network Access Point (or NAP) (not represented).

Optionally, each TE 14, 110 includes a display screen 142, 112 and a keyboard 144, 114, as a Man Machine Interface (or MMI) respectively. Alternatively, instead of a display screen, each TE 14, 110 is equipped with a touch sensitive display screen.

The MMI allows a terminal user to interact with the concerned TE 14, 110.

The TE 14, 110 comprise each an antenna(s) 146, 116 respectively allowing to exchange data, possibly over one or several mobile networks 16 (and/or an Internet type network), with a server 18 while using an LR and/or an SR RF link(s) 15, 19 respectively.

Alternatively or additionally, the TE 14 and/or 110 is(are) connected, over a wire link, to a network(s) that includes the

Each TE 14, 110 includes data processing means, such as one (micro)processor(s) and/or one (micro)controller(s) (not represented), data storing means (not represented), as a TE memory, and at least one Input/Output (or I/O) interface that are linked all together through a control and data bus (not represented).

Each TE 14, 110 plays, in a preferential manner, a role of a modulator-demodulator (or modem), so as to exchange data with the server 18.

Each TE memory may comprise one or several memories.

Each TE memory stores preferably, as a device identifier(s), an International Mobile Equipment Identity (or IMEI), a Uniform Resource Identifier (or URI), a Uniform Resource Locator (or URL), an email address and/or an Internet Protocol (or IP) address relating to the concerned TE 14 or 110.

The first or second device identifier(s) allow(s) identifying and addressing the concerned first or second device.

Each TE memory stores an Operating System (or OS).

In a particular embodiment, the TE 14 memory stores a Local Profile Assistant or the like, as an application for interfacing a user with an application (or termed first applet (when programmed in Java)) for sending data stored within the SE 12. The first applet is supported by the SE 12.

In a particular embodiment, the TE 110 memory stores preferably an application for interfacing a user with an application (or termed second applet) for receiving data to be stored within the SE 130. The second applet is supported by the SE 130.

Each TE 14, 110 I/O interface includes an interface, so as to exchange data with the coupled SE 12, 130 respectively.

Each TE 14, 110 I/O interface with the coupled SE 12, 130 may include an International Organization for Standardization (or ISO) 7816 interface, as a contact interface when the coupled SE 12, 130 is inserted within the TE 14, 110 respectively.

Alternately or additionally, each TE 14, 110 I/O interface with the coupled SE 12, 130 may include a contact-less interface for exchanging data while using an SR RF link. The SR RF link may be related to any technology type that allows the TE 14, 110 to exchange data with the coupled SE 12, 130 respectively and/or an external entity(ies), like e.g. the server 18 or a NAP.

The SE 12, as a first device, and the SE 130, as a second device, are preferably associated with or tied to the server 18.

The SE 12 and the SE 130 belongs preferably to one and the same user.

Each SE 12, 130 is connected, through a bi-directional contact and/or contact-less link(s) 13, 111, to the coupled TE 14, 110 respectively.

Each SE 12, 130 includes a chip.

Each SE 12, 130 chip includes one or several (micro)processor(s) (and/or one or several (micro)controller(s)) 122, 132, as data processing means, at least one memory 124, 134 as data storing means, and at least one I/O interface 126, 136 that are internally all connected, through an internal bidirectional data bus 123, 133 (respectively) to each other.

Each SE I/O interfaces 126, 136 allows communicating data from the internal chip components to the chip exterior and conversely.

Each SE processor 122, 132 processes, controls and communicates internally data with all the other components incorporated within the chip and, through the I/O interfaces 126, 136 respectively, with the chip exterior.

Each SE processor 122, 132 executes or runs one (or several) application(s).

Each SE processor 122, 132 is preferably able to initiate actions, in order to interact directly with the outside world, in an independent manner of the TE 14, 110 respectively. Such a capacity of interaction at an initiative of the SE 12, 130 is also known as proactive capacity. Each SE 12, 130 is thus able to request the TE 14, 110 to display at the display screen 142, 112 respectively a message, like "please enter a Personal Identity Number" (or PIN). Each SE 12, 130 is also able to send, at its own initiative, through the TE 14, 110 respectively, to any device connected to the TE 14, 110, for instance, a proactive command for sending to the server 18 data, like e.g. a request for registering a second device along with a first PIN or a request for getting the data.

The first SE memory 124 stores, preferably in a secure manner, as a user profile, one or several of sets of data relating, each, to one subscription, as non-executable data and data to be securely sent or transferred, at least in part, through the server 18, to the second SE memory 134.

Instead of non-executable data or additionally, the data to be securely sent or transferred, through the server 18, to the second SE memory 134 includes executable data that can be executed by the first SE 12 and/or the second SE 130.

Each set of data relating to one subscription includes preferably:
- an International Mobile Subscriber Identity (or IMSI) or the like, as a subscriber and a (service) subscription identifier for accessing a mobile network;
- a key Ki, as a Network Authentication Key (or NAK), allowing to authenticate the concerned subscriber to the concerned mobile network;
- Milenage or the like, as a network authentication algorithm, allowing to authenticate the concerned subscriber to the concerned mobile network;
- a file system including one or several Elementary Files (or EF);
- one or several security keys, like e.g. a key(s) for enciphering/deciphering data and/or a key(s) for signing data a key(s), as secret data; and/or
- one or several credentials, like e.g. a user name and/or an IDentifier (or ID) of the subscriber, as data relating to the user.

The first SE memory 124 stores preferably one or several SIM type applications. The SIM type application(s) allow(s) the host 14 to identify and authenticate to one or several mobile networks.

The first SE memory 124 stores the first applet.

The second SE memory 134 stores the second applet.

The first SE memory 124 may store data relating to a URI, a URL, an email address and/or an IP address relating to the server 18 to be addressed.

Each SE memory 124 or 134 stores preferably, as a first or second SE identifier(s), an IMSI, an Integrated Circuit Card Identifier (or ICCID), an eUICC IDentifier (or eID), a URI, a URL, an email address, an IP address, a Mobile Station International Subscriber Directory Number (or MSISDN), an IP Multimedia Private Identity (or IMPI), an IP Multimedia PUblic identity (or IMPU) and/or a Network Access Identifier (or NAI), as an identifier(s) relating to the concerned SE 12 or 130 respectively.

The first SE identifier(s) allow(s) identifying and addressing the concerned first SE 12.

The first SE processor 122 executes the first applet.

The second SE processor 132 executes the second applet.

Each SE processor 122 or 132 executes, in a preferred manner, one or several security functions, like e.g. a user authentication process, a data enciphering/deciphering process to be used before sending to/ after receiving from the server 18 data and/or a data signature process to be used before sending data.

The first applet may be configured to request to the first SE 12 user a first code or termed CODE1, as first credentials. According to such an embodiment, the first credentials includes credentials relating to a user of the first TE 14.

Alternately, the first applet is configured to retrieve from the first SE memory 124 first credentials.

The first applet is preferably configured to send, as a source device, to the server 18, a request for registering a second device, as a destination device, along with an identifier(s) relating to the second device and first credentials.

The second device identifier(s) allow(s) identifying and addressing the concerned second SE 130.

The first credentials is used for authorizing the server 18 to send data from the first SE 12, as a source device.

The second applet is configured to receive, as the destination device, from the server 18 a request for a data loading authorization along with second credentials.

The second applet may be configured to request to the second SE 130 user a second code or termed CODE2, as second credentials. According to such an embodiment, the second credentials includes credentials relating to a user of the second TE 110.

Alternately, the second applet is configured to retrieve from the second SE memory 134 second credentials.

The first credentials and/or the second credentials include a security code, a password, an electronic token, an On Time Password (or OTP), a passphrase, a PIN and/or the like.

The second credentials is used for authorizing to receive, as the destination device, data from the server 18.

The second applet is adapted to send to the server 18 a data loading authorization along with the second credentials that may be either previously requested to a user of the second SE 130 or retrieved from the SE memory 134.

The second applet is arranged to send to the server 18 a request for loading data in association with submitted second credentials that may be either previously requested to a user of the second SE 130 or retrieved from the SE memory 134.

The second applet is configured to receive from the server 18 a request for getting a data loading authorization in association with a request for getting first credentials.

The second applet is adapted to send to the server 18 a data loading authorization in association with submitted first credentials that may be either previously requested to a user of the second SE 130 or retrieved from the SE memory 134.

The second applet is adapted to receive from the server 18 data and stores (or lets store) the data received from the server 18.

When applicable, the second SE 130 is able to execute at least part of the received data.

The server 18 may be included within an OTA (acronym for "Over-The-Air") and/or an OTI (for "Over-The-Internet") platform(s).

The server 18 may be operated by a Mobile Network Operator (or MNO), a Mobile Virtual Network Operator (or MVNO), a bank operator, a service provider or on its behalf.

The server 18 is connected over a bi-directional wire or a wireless link(s) 17 to a mobile network(s) 18, an Internet type network(s) (not represented) and/or the like.

The server 18 plays a role of a secure provider of data that is shared with a first device, like e.g. the first SE 12.

The data shared between the server 18 and the first device includes executable data and/or non-executable data.

The server 18 is hosted by a computer including data processing means, like e.g. a processor(s) (not represented).

The server 18 is preferably able to run an application for managing a database relating to at least one service and communicating some information included within the database to outside.

The server 18 is dedicated to running an invention application for sending data from a source device that is either registered or to be registered to a destination device to be registered.

A destination device is preferably to be registered by a source device that is already registered or a device that is registered in association with the registered source device at the server 18 side.

The server 18 accesses a server memory(ies) (not represented), as data storing means, that stores the database.

The server 18 may include or be connected to the server memory(ies).

The database records preferably a plurality of subscribers or user accounts. Each subscriber (or user account) is associated with one or several identifiers relating to a first device, as a source device. The source device identifier(s) may include an IMSI, an ICCID, an eID, a URI, a URL, an email address, an IP address, a MSISDN, an IMPI, an IMPU and/or a NAI.

For a given subscriber (or user account), several devices, like e.g. a phone, a tablet and/or other computer device(s), as a terminal(s), in an association with one or several SE(s) may be registered within the database.

The database records in association with each subscriber (or user account) e.g. a user profile, as data that is shared with an associated source device and that may be sent or transferred, at least in part, to a destination device to be registered.

The server processor executes preferably several security functions, in order to protect access to information managed through or by the server 18.

The server processor executes the invention application for sending data from a source device to a destination device.

The server memory stores preferably rules for accessing the service managed by the server 18.

The rules for accessing the service may encompass, for each subscriber (or user account), a user profile(s) that is(are) eligible for accessing one or several services managed by or through the server 18.

The rules for accessing the service are preferably taken into account, so as to forbid or authorize access to the concerned service.

The server 18 is adapted to receive from a first device (or another device registered in association with the first device), as a source device, a request for registering a second device, as a destination device, along with first credentials and an identifier(s) relating to the second device.

The server 18 is configured to register in association with the (identified) first device (or another device registered in association with the first device) the received first credentials, as first reference credentials, and the received second device identifier(s).

The server 18 is arranged to send, based on the second device identifier(s), to the second device a request for getting a data loading authorization in association with a request for getting second credentials.

The server 18 is adapted to receive from the registered second device a data loading authorization associated with second credentials.

The server 18 is configured to register in association with the (identified) first device (or another device registered in association with the first device) the received second credentials, as second reference credentials.

The server 18 is arranged thus to store (or let store) within the server memory an association of the first credentials, as the first reference credentials, the second device identifier(s) and the second credentials, as the second reference credentials.

The server 18 (or another server (not represented) connected to the server 18) is adapted to receive from the second device a request for a data loading associated with submitted second credentials.

The server 18 (or another server (not represented) connected to the server 18) is configured to analyse whether the submitted second credentials do or do not match the second reference credentials.

Only if the submitted second credentials match the second reference credentials, the server 18 (or another server (not represented) connected to the server 18) is configured to send to the second device a request for getting a data loading authorization along with first credentials.

The server 18 (or another server (not represented) connected to the server 18) is arranged to receive from the second device a data loading authorization along with submitted first credentials.

The server 18 (or another server (not represented) connected to the server 18) is configured to analyse whether the submitted first credentials do or do not match the first reference credentials.

Only if the submitted first credentials match the first reference credentials, the server 18 (or another server (not represented) connected to the server 18) is configured to send to the second device at least a predetermined part of the user profile, as data shared between the server 18 and the source device.

**Figure 2** depicts an exemplary embodiment of a message flow 20 that involves notably the first SE 12, the second SE 130 and the server 18.

In the explained embodiment, it is assumed that the server 18 plays both a role of a server that registers the first SE 12, as a source device, the second SE 130, as a destination device, and first and second credentials to be provided to send at least a predetermined part of a user profile, as data shared between the source device and the server 18, and a role of a secure provider of the predetermined part of the user profile, only if the registered first and second credentials are submitted successfully from the destination device.

It is further assumed that first credentials and second credentials are each provided by the user of the corresponding SE host device.

Firstly, a user of the first SE 12 selects (not represented), through the first TE 14 MMI, the first applet. The first SE 12 launches an execution of the first applet. The first SE 12 requests (not represented), through the first TE 14 MMI, to register the second SE 130, as a destination device, while providing e.g. a first PIN or PIN1, as CODE1, and providing a MSISDN2 and/or the like, as an identifier(s) relating to the second SE 130.

The first SE 12 sends to the server 18 a first message 22 including a request for registering the second SE 130, as the destination device. The first message 22 includes or is accompanied with CODE1, as first credentials, and the MSISDN2, as the provided second SE 130 identifier(s).

The server 18 stores (or lets store) the received CODE1, as first reference credentials, and the received MSISDN2, as second SE 130 identifier(s).

Then, the server 18 sends, based upon the MSISDN2, as the second device identifier, to the second SE 130 a second message 24 including a request for a data loading authorization. The second message 24 includes or is accompanied with a request for getting second credentials.

The second SE 130 launches an execution of the second applet. The second SE 130 requests (not represented), through the second SE 130 MMI, a data loading authorization, while providing e.g. a second PIN or PIN2, as CODE2.

A user of the second SE 130 gives (not represented), through the second TE 130 MMI, a data loading authorization and e.g. a PIN2, as CODE2.

Once the second SE 130 has retrieved a data loading authorization and the CODE2, the second SE 130 sends to the server 18 a third message 26 including a data loading authorization. The third message 26 includes or is accompanied with the CODE2, as second credentials.

The server 18 stores 28 (or lets store) an association of the received CODE1, as first reference credentials, the received MSISDN2, as second SE 130 identifier(s), and the received CODE2, as second reference credentials.

Optionally, the server 18 sends to the second SE 130 a message 210 including a notification about its registration, as a destination device of a predetermined part of a user profile that is shared between the server 18 and the first SE 12, as a source device.

Optionally, the server 18 sends to the second SE 130 a message 212 including a notification about its registration, as a source device of a predetermined part of a user profile that is shared between the server 18 and the first SE 12.

The user of the second SE 130 selects (not represented), through the second TE 130 MMI, the second applet. The second TE 130 launches an execution of the second applet.

The user of the second SE 130 gives (not represented), through the second TE 130 MMI, a data loading request, while providing the PIN2, as CODE2.

Once the second SE 130 has retrieved a data loading request and the CODE2, the second SE 130 sends to the server 18 a fourth message 214 including a request for loading data. The fourth message 214 includes or is accompanied with the CODE2, as submitted second credentials.

The server 18 compares 216 the CODE2, as the submitted second credentials, to the registered second reference credentials.

If the submitted second credentials do not match the second reference credentials, then the server 18 denies 218 access to a data providing service and terminates a communication session that has been initiated by the second SE 130 user.

Otherwise, i.e. if the submitted second credentials match the second reference credentials, the server 18 sends to the second SE 130 a fifth message 220 including a request for a data sending authorization. The fifth message 220 includes or is accompanied with a request for getting first credentials.

The second SE 130 requests (not represented), through the second SE 130 MMI, a data loading authorization, while providing the PIN1.

The user of the second SE 130 gives (not represented), through the second TE 130 MMI, a data loading authorization and the PIN1, as CODE1 and submitted first credentials.

The second SE 130 sends to the server 18 a sixth message 222 including a data sending authorization. The sixth message 222 includes or is accompanied with submitted first credentials.

The server 18 compares 224 the CODE1, as the submitted first credentials, to the registered first reference credentials.

If the submitted first credentials do not match the first reference credentials, then the server 18 denies 226 access to a data providing service and terminates a communication session that has been initiated by the second SE 130 user.

Otherwise, i.e. if the submitted first credentials match the first reference credentials, the server 18 sends to the second SE 130 at least a predetermined part of the user profile 230, as data shared between the server 18 and the first SE 12.

Prior to sending at least a predetermined part of the user profile 230, the server 18 may de-activate the at least a predetermined part of the user profile 230 shared with the first SE 12 and activate the at least a predetermined part of the user profile 230 to be sent to the second SE 130.

Optionally, just before or just after at least a predetermined part of the user profile 230, the server 18 sends to the first SE 12 a message 228 including a command for erasing or deleting the user profile shared between the server 18 and the first SE 12.

The invention solution allows registering a second device, as a destination of data shared between a first device, as a source device, and a server with first and second credentials without needing to involve neither a person of a service provider nor a user of the source device nor a user of the destination device.

The invention solution allows securing a data providing service from the server (or another server) while authenticating the requester by verifying successfully the (registered) first and second credentials.

The embodiment that has just been described is not intended to limit the scope of the concerned invention. Other embodiments may be given. As another embodiment example, instead of exchanging with two different devices, the server exchanges with one and the same device. As still another embodiment example, instead of exchanging remotely with a server, the first device and/or the second device 130 exchanges, locally, possibly over a contact-less RF link, with the server.

## Claims

1. A method (20) for sending data from a source device to a destination device, **characterized in that,** a first device (12) and a server (18) accessing data shared between the first device and the server, the method comprises the following steps:
- the first device, as the source device, sends to a server a first message (22) including a request for registering a second device (130), as the destination device, the first message including or being accompanied with first credentials and an identifier relating to the second device;
- the server sends, based upon the identifier relating to the second device, to the second device a second message (24) including a request for a data loading authorization, the second message including or being accompanied with a request for getting second credentials;
- the second device sends to the server a third message (26) including a data loading authorization, the third message including or being accompanied with second credentials;
- the server stores (28) an association of the first credentials, the identifier relating to the second device and the second credentials;
- the second device sends to the server a fourth message (214) including a request for loading data, the fourth message including or being accompanied with submitted second credentials;
- the server compares (216) the submitted second credentials to the second credentials stored at the server side;
- only if the submitted second credentials match the second credentials stored at the server side, the server sends to the second device a fifth message (220) including a request for a data sending authorization, the fifth message including or being accompanied with a request for getting first credentials;
- the second device sends to the server a sixth message (222) including a data sending authorization, the sixth message including or being accompanied with submitted first credentials;
- the server compares (224) the submitted first credentials to the first credentials stored at the server side;
- only if the submitted first credentials match the first credentials stored at the server side, the server sends to the second device at least a predetermined part (230) of the data shared between the server and the first device.

2. Method according to claim 1, wherein the first credentials includes credentials relating to a user of the first device.

3. Method according to claim 1 or 2, wherein the second credentials includes credentials relating to a user of the second device.

4. Method according to any of claims 1 to 3, wherein the first credentials and/or the second credentials includes at least one element of a group comprising:
- a security code;
- a password;
- an electronic token;
- an OTP;
- a passphrase; and
- a PIN.

5. Method according to any of claims 1 to 4, wherein the identifier relating to the second device includes at least one element of a group comprising:
- a MSISDN;
- an IMEI;
- an IMSI;
- an EID;
- an ICCID;
- a URL;
- a URI;
- an email address;
- an IP address.

6. Method according to any of claims 1 to 5, wherein the data shared between the first device and the server includes executable data and/or non-executable data.

7. Method according to any of claims 1 to 6, wherein, prior to sending to the second device the at least a predetermined part of the data shared between the server and the first device, the server de-activates the at least a predetermined part of the data shared with the first device and activates the at least a predetermined part of the data to be sent to the second device.

8. Method according to claim 7, wherein the server further sends to the first device a seventh message (228) including a command for erasing the data shared between the server and the first device.

9. A server (18) for sending data from a source device to a destination device, **characterized in that**, the server accessing data shared between the server and a first device (12), the server is configured to:
- receive from the first device, as the source device, a first message (22) including a request for registering a second device (130), as the destination device, the first message including or being accompanied with first credentials and an identifier relating to the second device;
- send, based upon the identifier relating to the second device, to the second device a second message (24) including a request for a data loading authorization, the second message including or being accompanied with a request for getting second credentials;
- receive from the second device a third message (26) including a data loading authorization, the third message including or being accompanied with second credentials;
- store (28) an association of the first credentials, the identifier relating to the second device and the second credentials;
- receive from the second device a fourth message (214) including a request for loading data, the fourth message including or being accompanied with submitted second credentials;
- compare (216) the submitted second credentials to the second credentials stored at the server side;
- send, only if the submitted second credentials match the second credentials stored at the server side, to the second device a fifth message (220) including a request for getting a data sending authorization, the fifth message including or being accompanied with a request for getting first credentials;
- receive from the second device a sixth message (222) including a data sending authorization, the sixth message including or being accompanied with submitted first credentials;
- compare (224) the submitted first credentials to the first credentials stored at the server side;
- send, only if the submitted first credentials match the first credentials stored at the server side, to the second device at least a predetermined part (230) of the data shared between the server and the first device.

10. A system for sending data from a source device to a destination device, **characterized in that,** the system including at least a first device (12) and a server (18), the first device and the server comprising means for accessing data shared between the first device and the server, the first device is configured to:
- send, as the source device, to the server a first message (22) including a request for registering the second device (130), as the destination device, the first message including or being accompanied with first credentials and an identifier relating to the second device; and
**in that** the server is configured to:
- send, based upon the identifier relating to the second device, to the second device a second message (24) including a request for a data loading authorization, the second message including or being accompanied with a request for getting second credentials;
- receive from the second device a third message (26) including a data loading authorization, the third message including or being accompanied with second credentials;
- store (28) an association of the first credentials, the identifier relating to the second device and the second credentials;
- receive from the second device a fourth message (214) including a request for loading data, the fourth message including or being accompanied with submitted second credentials;
- compare (216) the submitted second credentials to the second credentials stored at the server side;
- send, only if the submitted second credentials match the second credentials stored at the server side, to the second device a fifth message (220) including a request for getting a data sending authorization, the fifth message including or being accompanied with a request for getting first credentials;
- receive from the second device a sixth message (222) including a data sending authorization, the sixth message including or being accompanied with submitted first credentials;
- compare (224) the submitted first credentials to the first credentials stored at the server side;
- send, only if the submitted first credentials match the first credentials stored at the server side, to the second device at least a predetermined part (230) of the data shared between the server and the first device.
